# EUROPÄISCHE PATENTSCHRIFT

(11) **EP 1 176 332 B1**
(45) Veröffentlichungstag und Bekanntmachung des Hinweises auf die Patenterteilung: **17.03.2004**
(21) Anmeldenummer: 01116503.2
(22) Anmeldetag: 07.07.2001
(51) Int. Cl.: F16F 9/05, F16F 9/084

(54) **Luftfederbein**
Air spring strut
Jambe de ressort pneumatique

(30) Priorität: 29.07.2000 DE 10037026
(43) Veröffentlichungstag der Anmeldung: 30.01.2002
(73) Patentinhaber: ThyssenKrupp Bilstein GmbH, 58256 Ennepetal (DE); Phoenix AG, 21079 Hamburg (DE)
(72) Erfinder: Drees, Helmut, Dipl.-Ing., 58256 Ennepetal (DE); Pesch, Christoph, Dipl.-Ing., 53757 St. Augustin (DE); Branco, Antonio, 21073 Hamburg (DE); Lorenz, Rüdiger, Dipl.-Ing., 21423 Winsen (DE); Schlittchen, Jens, Dipl.-Ing, 08058 Zwickau (DE)

(56) Entgegenhaltungen:
- WO-A-91/13776
- DE-A- 4 304 961
- DE-A- 19 819 642
- DE-B- 1 216 126

## Beschreibung

Die Erfindung betrifft ein Luftfederbein nach dem Oberbegriff des Anspruchs 1. Luftfederbeine werden verstärkt in komfortabel gefederten Fahrzeugen eingesetzt. Derartige Luftfederbeine sind beispielsweise aus der DE 198 19 642 A1 bekannt. Dabei ist innerhalb der Luftfeder, die im Wesentlichen einen Rollbalg mit an seinem Ende angeordneten Abschluss- und Befestigungsteilen aufweist, ein hydraulischer Schwingungsdämpfer angeordnet. Am Übergang zum Schwingungsdämpfer ist es erforderlich, eine Abdichtung vorzunehmen. Hierbei hat es sich bewährt, in Nuten eingesetzte O-Ringe zu verwenden. Es ist sehr aufwendig, diese Nuten, vorzugsweise mechanisch, in die Abschluss- und Befestigungsbauteile einzubringen. Dieses ist auch mit einem hohen Werkzeugverschleiß verbunden. Da die Abschluss- und Befestigungseinrichtungen vorzugsweise aus Kunststoff bestehen, ist die spanende Bearbeitung auch von daher schwierig, als Materialspannungen und Risse entstehen können.

Der Erfindung liegt die Aufgabe zugrunde, eine einfachere Abdichtung zwischen Abschluss- und Befestigungseinrichtung und Schwingungsdämpfer zu finden, die jedoch eine sichere Abdichtung mittels O-Ringen ermöglicht.

Diese Aufgabe wird erfindungsgemäß durch die Merkmale des Anspruchs 1 gelöst. Vorteilhafte Aus- und Weiterbildungen sind in den Ansprüchen 2 bis 4 beschrieben.

Die mit der Erfindung erzielten Vorteile bestehen insbesondere darin, dass die Aufnahme für die O-Ringe nicht mehr spanend eingebracht werden muss. Damit werden die vorbeschriebenen Nachteile vermieden. Des Weiteren entfällt ein Arbeitsgang, was die Herstellung wesentlich vereinfacht.

Ein Ausführungsbeispiel der Erfindung ist in der Zeichnung dargestellt und wird im Folgenden näher beschrieben. Es zeigen
- Fig. 1: eine schematische Darstellung eines Luftfederbeins,
- Fig. 2: eine vergrößerte Darstellung des Anschlusses zwischen dem oberen Befestigungsteil und der Kolbenstange und
- Fig. 3: eine vergrößerte Darstellung des Anschlusses zwischen dem Abrollmantel als unterem Befestigungsteil und dem Schwingungsdämpferzylinder.

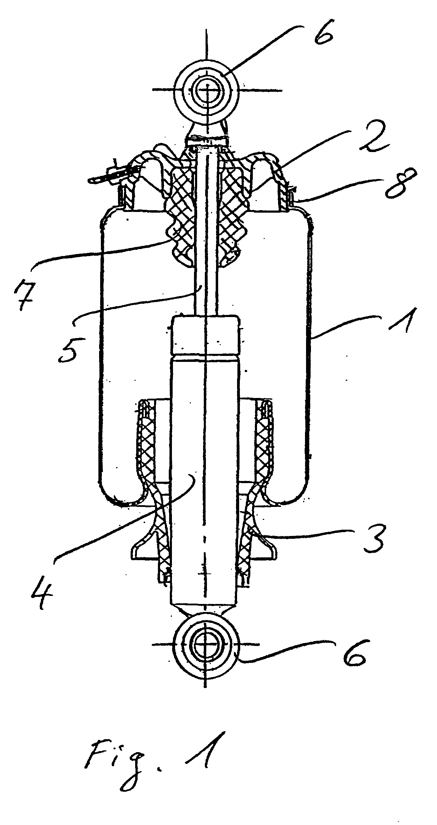

Luftfederbeine bestehen vorzugsweise aus einer Luftfeder, innerhalb derer ein hydraulischer Schwingungsdämpfer angeordnet ist. Wie aus Fig. 1 erkennbar, besteht die Luftfeder im Wesentlichen aus einem Rollbalg 1, an dessen Enden Abschluss- und Befestigungsteile angebracht sind. Im Ausführungsbeispiel sind dieses ein Abschlussdeckel 2 und ein Abrollmantel 3. Der Schwingungsdämpfer weist einen Dämpferzylinder 4 auf, in den oszillierend eine Kolbenstange 5 eintaucht. An den Enden sowohl des Dämpferzylinders 4 als auch der Kolbenstange 5 sind zur Anbindung an die Karosserie bzw. an die Radaufhängung Befestigungsaugen 6 angeordnet.

Abschlussdeckel 2 und Abrollmantel 3 bestehen vorzugsweise aus Kunststoff. Diesem Kunststoff können Verstärkungsmaterialien, wie Glasfasern, beigemengt werden. Sie werden durch Spritzgießen hergestellt.

Unterhalb des Abschlussdeckels 2, die Kolbenstange 5 umgebend, ist ein elastisch nachgiebiger Druckanschlag 7 vorgesehen. Durch diesen Druckanschlag 7 wird gewährleistet, dass bei einer starken Stoßbelastung die Kolbenstange 5 nicht bis zum mechanischen Endanschlag einfährt, sondern vorher elastisch gedämpft wird.

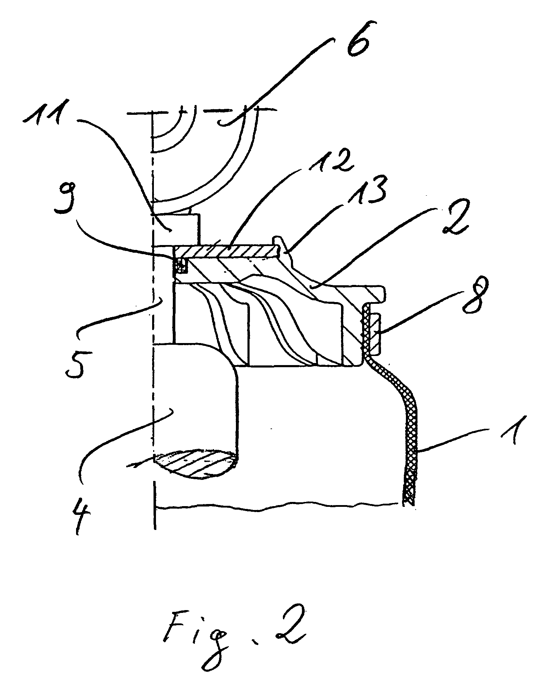

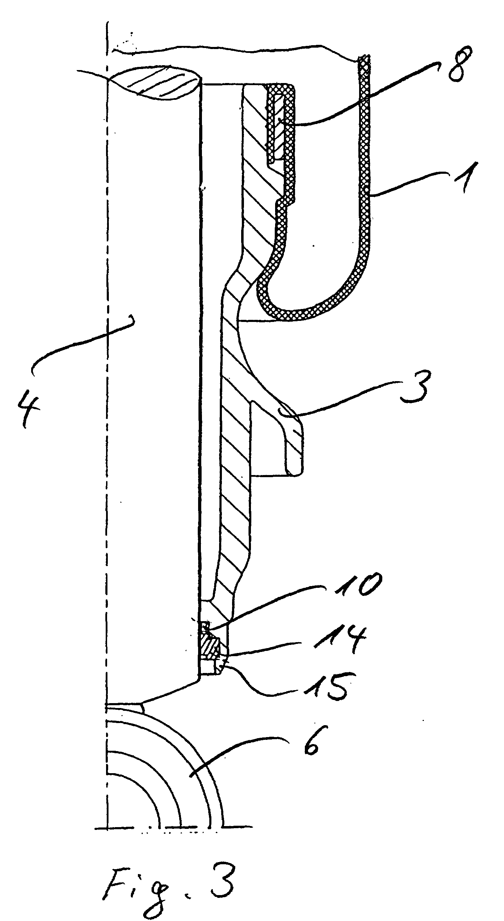

Wie auch aus den Fig. 2 und 3 ersichtlich, erfolgt die Anbindung und gasdichte Verbindung des Rollbalges 1 gegenüber dem Abschlussdeckel 2 und dem Abrollmantel 3 über ein Verspannen mittels Spannbändern 8. Zum gasdichten Abdichten zwischen Abschlussdeckel 2 und Kolbenstange 5 bzw. Abrollmantel 3 und Dämpferzylinder 4 werden O-Ringe 9, 10 verwendet.

Der obere O-Ring 9 liegt in einem axial und zum Befestigungsauge 6 offenen Rücksprung im Abschlussdeckel 2, wie dieses im Detail in Fig. 2 dargestellt ist. Der O-Ring 9 stützt sich radial nach innen gegen die Kolbenstange 5 ab. Der Rücksprung zur Aufnahme des O-Rings 9 ist so bemessen, dass der O-Ring in radialer Richtung verformt wird, wodurch eine innere Spannung erzeugt wird, die das sichere Abdichten bewirkt.

Die Kolbenstange 5 ist befestigungsaugenseitig mit einem Bund 11 ausgebildet. Dieser Bund 11 dient zur Anlage des Abschlussdeckels 2. Zwischen Abschlussdeckel 2 und Bund 11 liegt eine Scheibe 12. Diese Scheibe 12 verschließt den den O-Ring 9 tragenden Rücksprung in axialer Richtung. Dabei kann auch in axialer Richtung eine Spannung auf den O-Ring 9 aufgebracht werden. Die Scheibe 12 ist wenigstens mit einem radialen Schlitz versehen. Vorzugsweise ist sie jedoch mehrfach radial geteilt ausgebildet, sodass Scheibensegmente vorliegen. Die Scheibe 12 wird an ihrem äußeren Umfang mittels Schnapphaken oder einer äußeren Wulst 13 gehalten.

Die Montage der Dichtung erfolgt derartig, dass nach der Vormontage von Luftfeder und Schwingungsdämpfer der Abschlussdeckel 2 mit einem Abstand unterhalb des Bundes 11 liegt. Danach wird der O-Ring 9 in den Rücksprung eingelegt und die Scheibe 12 segmentweise unter den Wulst 13 geschoben. Nach Vorschieben des Abschlussdeckels 2 bis zur Anlage an den Bund 11 ist eine dauerhafte, gasdichte und sichere Fixierung gegeben. Dabei ist anzumerken, dass die axiale Sicherung durch den inneren Überdruck in der Luftfeder gesichert wird.

Die Anbindung des Abrollmantels 3 an den Dämpferzylinder 4, wie sie in Fig. 3 dargestellt ist, erfolgt entsprechend. Im offenen Rücksprung im Abrollmantel 3 liegt wiederum ein O-Ring 10, der sich radial unter Vorspannung gegenüber dem Dämpferzylinder 4 abstützt. Die axiale Fixierung und Verspannung des O-Rings 10 erfolgt hier über einen Ring 14, der wie die Scheibe 12 mindestens eine radiale Trennung aufweist oder auch mehrfach radial getrennt ist, wodurch er dann zu Segmenten geteilt ist. Die radiale und axiale Sicherung dieses vorzugsweise segmentförmig geteilten Ringes 14 erfolgt wiederum über Schnapphaken bzw. einen Wulst 15 am unteren Ende des Abrollmantels 3.

Alternativ zur Ausbildung gemäß Fig. 3 gibt es Luftfederbeine, bei denen der Abrollmantel 3 oder ein entsprechendes Abschluss- oder Befestigungsbauteil nicht direkt gegenüber dem Dämpferzylinder abgedichtet wird. Häufig ist der hydraulische Schwingungsdämpfer noch mit einem Federträger versehen. Dann erfolgt die Abdichtung mittels des O-Ringes 10 in entsprechender Weise gegen den Federträger.

### Bezugszeichenliste

- 1.: Rollbalg
- 2.: Abschlussdeckel
- 3.: Abrollmantel
- 4.: Dämpferzylinder
- 5.: Kolbenstange
- 6.: Befestigungsauge
- 7.: Druckanschlag
- 8.: Spannband
- 9.: O-Ring
- 10.: O-Ring
- 11.: Bund
- 12.: Scheibe
- 13.: Wulst
- 14.: Ring
- 15.: Wulst

## Patentansprüche

1. Luftfederbein, bestehend aus einem auf einem Abrollmantel (3) abrollbaren Rollbalg (1), einem innerhalb des Rollbalges (1) und/oder des Abrollmantels (3) angeordneten hydraulischen Schwingungsdämpfer mit einer in diesen oszillierend eintauchenden Kolbenstange (5) und einem jeweils als erstes Bauteil bezeichneten oberen und unteren, mit Dichtungen versehenem Abschluss- und Befestigungsteil, wobei als Dichtungen O-Ringe (9, 10) verwendet werden, **dadurch gekennzeichnet, dass** die O-Ringe (9, 10) in einem jeweils einseitig axial und radial offenen Rücksprung dieses ersten Bauteils liegen, sich radial an einem zweiten, dem Schwingungsdämpfer zugeordneten Bauteil abstützen und axial über einen mit dem ersten Bauteil verbundenen Ring (14) oder eine Scheibe (12) gehalten und/oder verspannt sind.

2. Luftfederbein nach Anspruch 1, **dadurch gekennzeichnet, dass** die O-Ring-Dichtung zwischen Dämpferzylinder (4) oder einem mit diesem verbundenen Federträger und Abrollmantel (3) angeordnet ist.

3. Luftfederbein nach Anspruch 1, **dadurch gekennzeichnet, dass** die O-Ring-Dichtung zwischen Kolbenstange (5) und mit dem Rollbalg (1) verbundenem Abschlussdeckel (2) angeordnet ist.

4. Luftfederbein nach einem der Ansprüche 1 bis 3, **dadurch gekennzeichnet, dass** der die O-Ring-Dichtung haltende Ring (14) oder die Scheibe (12) ein- oder mehrfach radial geteilt ausgebildet ist und als Schnapp-Rast-Verbindung in eine umlaufende Nut des ersten Bauteils eingreift.

## Claims

1. Pneumatic shock-absorbing leg consisting of a roll gaiter seal (1) which can roll down over a roll-down periphery (3), a hydraulic vibration damper which is disposed inside the roll gaiter seal (1) and/or the roll-down periphery (3) and has a piston rod (5), which travels in an oscillating manner therein, and an upper and a lower closing and fastening component designated respectively as the first component and provided with seals, wherein the seals used are O-rings (9, 10), **characterised in that** the O-rings (9, 10) lie in a recess of this first component which is axially and radially open in each case on one side, said O-rings are radially supported against a second component, which is allocated to the vibration damper, and are held and/or clamped in an axial manner by a ring (14), which is connected to the first component, or by a disk (12).

2. Pneumatic shock-absorbing leg as claimed in claim 1, **characterised in that** the O-ring seal is disposed between the damping cylinder (4) or a spring support, which is connected thereto, and the roll-down periphery (3).

3. Pneumatic shock-absorbing leg as claimed in claim 1, **characterised in that** the O-ring seal is disposed between the piston rod (5) and the closing cap (2) which is connected to the roll gaiter seal (1).

4. Pneumatic shock-absorbing leg as claimed in any one of claims 1 to 3, **characterised in that** the ring (14), which holds the O-ring seal, or the disk (12) is formed with one or several radial divisions and engages, in the form of a snap-in connection, into a circumferential groove of the first component.

## Revendications

1. Jambe d'amortisseur pneumatique constituée d'un soufflet de déplacement (1) apte à se déplacer sur une enveloppe de déplacement (3), d'un amortisseur hydraulique de vibrations disposé à l'intérieur du soufflet de déplacement (1) et/ou de l'enveloppe de déplacement (3), l'amortisseur hydraulique de vibrations comprenant une tige de piston (5) qui s'y enfonce de manière oscillante, une pièce supérieure de fermeture et de fixation, appelée premier composant, et une pièce inférieure de fermeture et de fixation dotée de joints d'étanchéité, des joints toriques (9, 10) étant utilisés comme joints d'étanchéité, **caractérisée en ce que** les joints toriques (9, 10) sont situés dans un retrait de ce premier composant qui est ouvert radialement et sur un côté axial, sont soutenus radialement sur un deuxième composant associé à l'amortisseur de vibrations, et sont maintenus et/ou serrés axialement par une bague (14) ou par un disque (12) reliés au premier composant.

2. Jambe d'amortisseur pneumatique selon la revendication 1, **caractérisée en ce que** les joints toriques d'étanchéité sont disposés entre le cylindre (4) de l'amortisseur, ou un support élastique relié à ce dernier, et l'enveloppe de déplacement (3).

3. Jambe d'amortisseur pneumatique selon la revendication 1, **caractérisée en ce que** les joints toriques d'étanchéité sont disposés entre la tige de piston (5) et un couvercle de fermeture (2) relié au soufflet de déplacement (1).

4. Jambe d'amortisseur pneumatique selon l'une des revendications 1 à 3, **caractérisée en ce que** la bague (14) ou le disque (12) qui maintient les joints toriques d'étanchéité est divisé une ou plusieurs fois dans le sens radial, et s'engage dans une rainure périphérique du premier composant en formant une liaison rapide par encliquetage.
